Europäisches Patentamt

European Patent Office

Office européen des brevets

(11) Veröffentlichungsnummer : **0 129 512 B1**

# EUROPÄISCHE PATENTSCHRIFT

(45) Veröffentlichungstag der Patentschrift :
30.09.87

(51) Int. Cl.⁴ : **B 65 B 9/20**, B 65 B 51/16

(21) Anmeldenummer : **84810286.9**

(22) Anmeldetag : **12.06.84**

(54) Vorrichtung an einer Verpackungsmaschine zum Herstellen von Verpackungsbeuteln.

(30) Priorität : 20.06.83 CH 3366/83

(43) Veröffentlichungstag der Anmeldung :
27.12.84 Patentblatt 84/52

(45) Bekanntmachung des Hinweises auf die Patenterteilung : 30.09.87 Patentblatt 87/40

(84) Benannte Vertragsstaaten :
DE FR GB IT

(56) Entgegenhaltungen :
FR-A- 1 241 117
GB-A-  620 891

(73) Patentinhaber : SIG Schweizerische Industrie-Gesellschaft
CH-8212 Neuhausen am Rheinfall (CH)

(72) Erfinder : Kopp, Georg
Pfaffenschlappengasse 470
CH-8448 Uhwiesen (CH)

(74) Vertreter : White, William et al
PATENTANWALTS-BUREAU ISLER AG Postfach 6940
Walchestrasse 23
CH-8023 Zürich (CH)

## Beschreibung

Die vorliegende Erfindung betrifft eine Vorrichtung an einer Verpackungsmaschine zum Herstellen von Verpackungsbeuteln gemäss dem Oberbegriff des unabhängigen Patentanspruchs 1.

Mit Beutelabpackmaschinen werden abgefüllte Beutel hergestellt. Aus der US-A 4 291 520 ist es bekannt geworden, ein von einer Vorratsrolle ablaufendes Band aus Verpackungsmaterial mittels einer Formschulter um einen Hohldorn zu formen und nach der Formung eine Längsnaht und Quernähte zu schweissen. Das zu verpackende Gut wird durch den Hohldorn eingefüllt. Der gefüllte und mit drei Nähten verschlossene Beutel wird dann abgeschnitten. Ein weiteres Beispiel für eine solche Verpackungsmaschine ist auch in der CH-A 416 434 oder in der GB-A 1 271 214 beschrieben.

Gemäss der zuletzt genannten GB-A 1 271 214 ist es bekannt, mehrere Hohldorne, beispielsweise vier nebeneinander anzuordnen. Die beiden Bahnen werden mittels Siegelwalzen im Bereich der Hohldorne in fünf Bahnen versiegelt, so dass vier Beutel nebeneinander gebildet werden. Unterhalb der Abgabeenden der Hohldorne ist ein Paar Siegelbacken zur Bildung einer Quersiegelnaht angeordnet. Schneidmittel zum Abtrennen einer Reihe von Beuteln sind mit diesen Siegelbacken vereinigt. Mittels einer Drehwalze mit Saugnäpfen werden die Viererreihen von Beuteln in Transportnischen einer Transportvorrichtung abgelegt.

Gemäss der genannten CH-A 416 434 werden die beiden Bahnen ab einer einzigen Vorratsrolle abgenommen, die dann mittig geteilt wird und dann werden die beiden Bahnen über Umlenkmittel direkt einer Formführung zugeleitet, um danach durch Walzen mit Längs- und Quersiegelrippen in Beutel geschweisst zu werden. Nach dem allseitigen Versiegeln werden die Beutel zuerst in Längsrichtung und dann in Querrichtung abgeschnitten.

In beiden erwähnten Beispielen sind keine Führungen für die Bahnen vor dem Siegeln vorgesehen, sondern die beiden Bahnen werden direkt um den Hohldorn geformt und versiegelt. Steife Folien lassen sich auf diese Weise nicht verarbeiten, weil sie beim Einfüllen und bei der Herstellung der Längssiegelnähte einem Zug in Querrichtung unterworfen sind, so dass die Siegelnaht nicht zugfrei herstellbar ist. Daraus resultieren undichte Packungen.

Dies liesse sich beheben, wenn es möglich wäre, die Bänder vor der Formung in Streifen zu schneiden. Bei beiden beschriebenen Anordnungen befindet sich die Schneidstation stromabwärts der Siegelstation. Einen Längsschneider vor der Formung und Siegelung anzuordnen, geht bei beiden Beispielen nicht, weil keine genügende seitliche Führung vorhanden ist und die Streifen würden seitlich ablaufen.

Es ist deshalb eine Aufgabe der Erfindung, eine Anordnung gemäss der CH-A 416 434 in der Weise zu verbessern, dass gefüllte Einzelbeutel mit guter Beutelqualität hergestellt werden können, wobei die Steifigkeit des Verpackungsmaterials unerheblich ist.

Erfindungsgemäss wird dies durch die Merkmale im kennzeichnenden Teil des unabhängigen Patentanspruches 1 erreicht. Besonders vorteilhafte Ausführungsformen sind in den abhängigen Patentansprüchen beschrieben.

Ein Ausführungsbeispiel der Erfindung wird nachfolgend anhand der Zeichnung erläutert. Es zeigen :

Figur 1 eine schematische Darstellung einer Verpackungsmaschine zur Herstellung von gefüllten Einzelbeuteln in erfindungsgemässer Ausführungsform,

Figur 2 eine Schnittansicht gemäss der Schnittlinie II-II in Fig. 3 der Siegelstation mit Längsschneider, Hohldorn und Formschulter in grösserem Massstab und einerseits geschnitten,

Figur 3 eine Draufsicht auf die Siegelstation,

Figur 4 einen Aufriss eines modifizierten Stützringes mit Formschulter in vergrössertem Massstab, und

Figur 5 einen Seitenriss des Stützringes gemäss Fig. 4 zum Teil geschnitten ohne Formschulter.

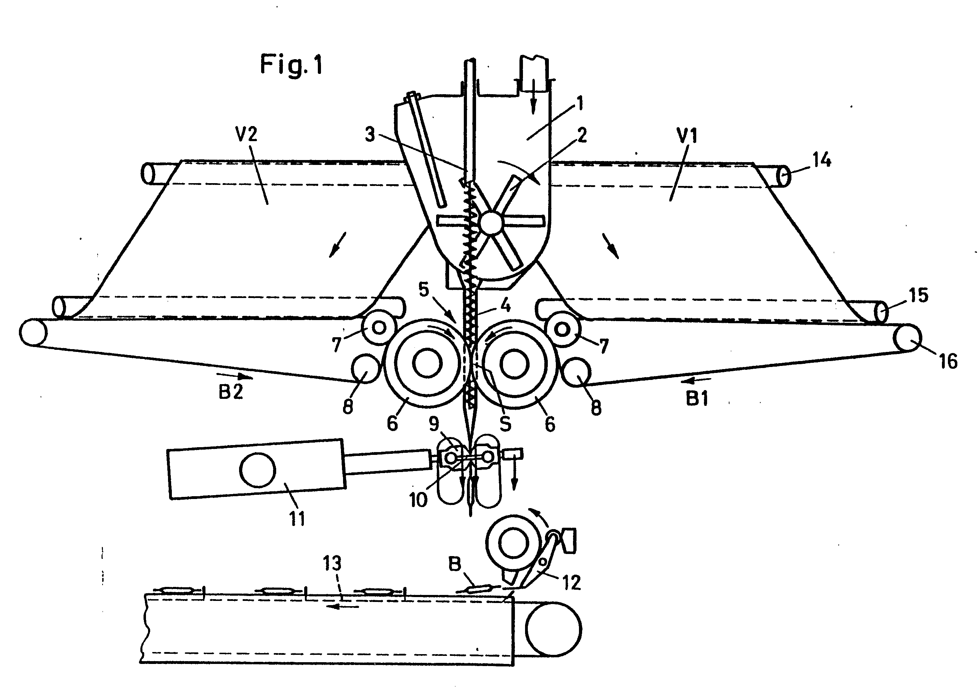

An der Verpackungsmaschine gemäss Fig. 1 lassen sich folgende Teile erkennen : Der Einfülltrichter 1 mit Rührflügel 2 und Hubschneckenfüller 3 mit dem Einfülldorn 4. Darunter befinden sich die Siegelstation 5 mit dem im Aufriss gezeichneten Siegelscheibenpaar 6 ; den Längsschneidern 7 und den stromaufwärtig angeordneten Umlenkwalzen 8. Weiter stromabwärts der Siegelstation 5 befindet sich die Querheizung 9 mit den Trennmessern 10 mit ihrem Antrieb 11 für eine oszillierende Bewegung. Details für diesen Antrieb können der genannten US-A 4 291 520 entnommen werden. Die einzeln anfallenden gefüllten Beutel B werden mittels einer Zange 12 gefasst und auf ein Transportband 13 abgelegt.

Die Teilung des bandförmigen Verpackungsmaterials V in zwei Teilbahnen V1 und V2 erfolgt gemäss der genannten CH-A 416 434. Zur Vereinfachung der Zeichnung sind die hinter dem Einfüllstrichter 1 befindliche Vorratsrolle und das Trennmesser nicht dargestellt. Die beiden Teilbahnen V1, V2 werden nach dem Trennen über eine erste Führungswalze 14, eine zweite Führungswalze 15 und zwei dritte Führungswalzen 16 in gegenläufige Bänder B1, B2 geformt.

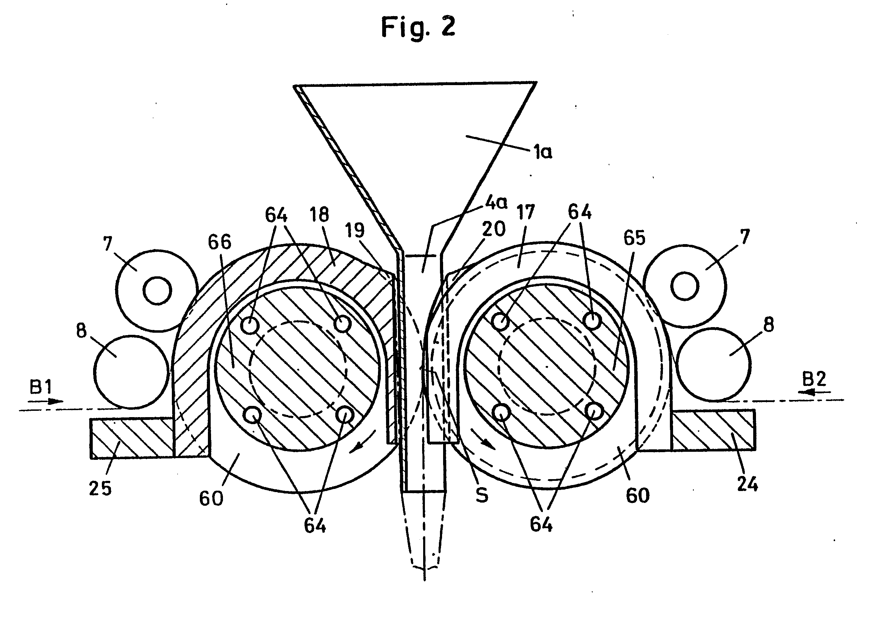

Von den Führungswalzen 8 weg gelangen die beiden Bänder B1, B2 zu den konvex gewölbten Stützelementen 17, 18 mit den jeweils beidseits angeordneten Siegelscheibenpaaren 60, 61, 62, 63. Wie Fig. 2 zeigt, sind die Siegelscheiben 60-63 auf mit Heizelementen 64 bestückten Trägerwalzen 65, 66 geführt. In Fig. 2 sind überdies die beiden Formschultern 19, 20, die über die Umfangslinie der Siegelscheiben 60-63 vorstehen, deutlich ersichtlich.

Die Formschultern 19, 20 sind konkav gewölbt und umfassen den Hohldorn 4 auf einem Teil des Umfanges, so dass die beiden Bahnen B1, B2, die an dieser Stelle in beispielsweise zwei Streifen aufgeteilt sind, je mit einem Luftspalt um den Hohldorn 4 herum geformt und durch Längssiegelnähte miteinander verbunden werden.

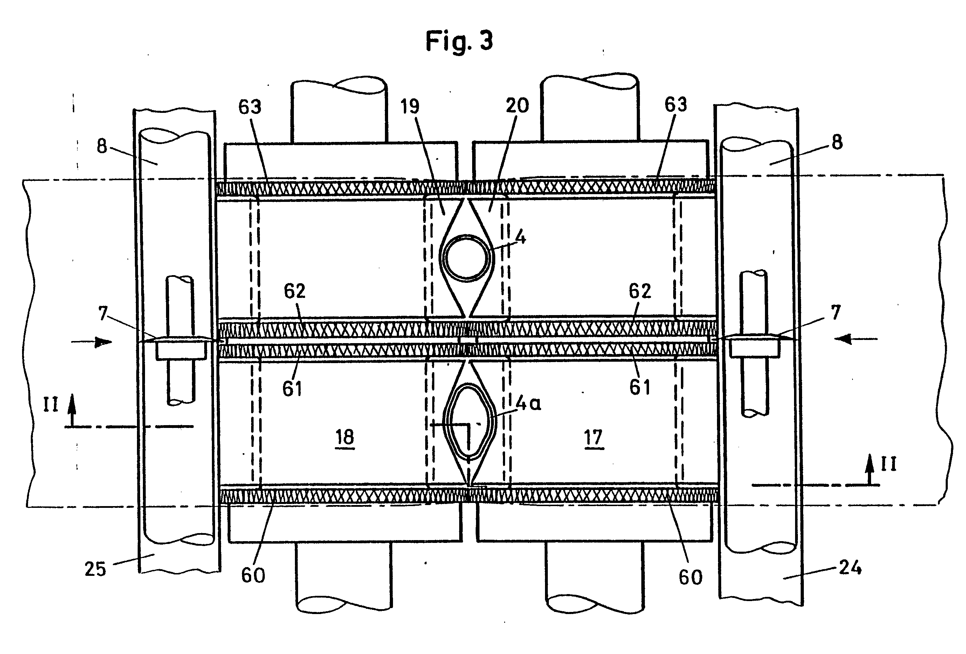

Im Grundriss Fig. 3 sind zwei unterschiedlich geformte Hohldorne 4, 4a dargestellt. Selbstverständlich sind diese jeweils für ein bestimmtes Einfüllgut und bei einer Verpackungsmaschine jeweils gleich ausgebildet, wie jedem Fachmann leicht verständlich sein dürfte. Durch den Hohldorn 4a kann das beispielsweise durch Wägen abgemessene Füllgut vom Fülltrichter 1a (Fig. 2) in freiem Fall in den Beutel. Der Weg des Einschlagmaterials B1, B2 ist mit strichpunktiert gezeichneten Linien angedeutet. Dies ist eine Modifikation gegenüber Fig. 1, bei der das Füllgut mittels einer Schnecke 3 durch den Hohldorn in Form eines Kreiszylinders gefördert wird.

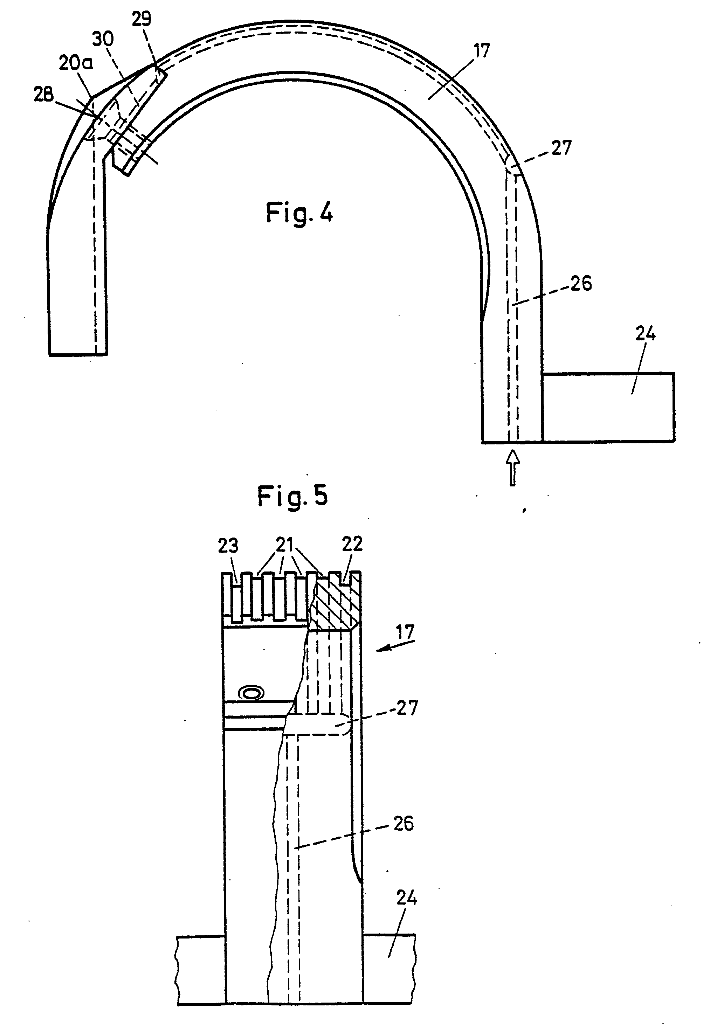

Das Stützelement 17 in Fig. 4 und 5 ist eine veränderte Ausführungsform gegenüber demjenigen gemäss Fig. 2 und ist mit einer separaten Formschulter 20a und mit Bohrungen 26, 30 und Nuten 21, 22, 23 für ein Kühlmittel versehen. Die Formschulter 20a ist mittels zweier Schrauben 28 am Stützelement 17 befestigt. Demnach haben sie die Form eines axial geschnittenen Hohlzylinders mit radialen Nuten 21, von denen die beiden aussenliegenden Nuten 22, 23 etwas tiefer eingeschnitten sind als die übrigen Nuten 21. Der Grund dafür wird später noch beschrieben werden. Die einzelnen Streifen aus den Bändern B1 und B2 werden dadurch genau ausgerichtet bis zur Formschulter 20 geführt, so dass ein seitliches Abgleiten verunmöglicht ist. Die Formschulter 20, durch die die Aussenpartien der Streifen im Vergleich zu den Mittelpartien angehoben werden, führen die Streifen ebenfalls ausgerichtet zu der Siegelstelle S (Fig. 1, 2) hin. Ueberdies liegen die Ränder der Streifen auf dem ganzen Weg entlang der Stützelemente 17, 18 auf den Siegelscheiben 60-63 auf, so dass das Material örtlich vorgewärmt ist und nach dem Zusammenpressen an der Siegelstelle S versiegelt ist.

Wenn nun ein Kühlmittel, beispielsweise Luft in Pfeilrichtung durch die Bohrung 26 in die Quernute 27 und in die Nuten 21, 22, 23 geblasen wird, so können sich lediglich die Randpartien der Streifen und nicht die Mittelpartien erwärmen. Damit wirklich nur die Randpartien erwärmt werden, wurde auch vorgeschlagen, die äusseren beiden Nuten 22, 23 tiefer einzustechen, damit ein stärkerer Luftstrom erzeugt werden kann. Weil überdies die Formschulter 20a den Hohlraum auf der gesamten Partie bei der Siegelstelle S umfasst und durch das Kühlmittel aus den Nuten der Stützelemente 17, 18 gekühlt wird, ist auch hier eine Wärmestrahlung von den Trägerwalzen 65, 66 auf die Beutel und den Hohldorn 4, 4a abgeschirmt. Das Kühlmittel kann durch Nuten 29, 30 in der Formschulter 20a entweichen. Durch diese Massnahmen kann mit einer erfindungsgemässen Vorrichtung auch Zucker abgefüllt werden, ohne dass eine Gefahr des Karamelisierens besteht.

Weitere Vorteile werden noch darin gesehen, dass der Füllquerschnitt, wie durch den Hohldorn 4a dargestellt ist, vergleichsweise gross dimensioniert werden kann. Infolge der bestimmten grossen Umschlingung der Siegelscheiben 60-63 kann die Temperatur vergleichsweise niedrig gehalten werden, wodurch auch bei allfälligem Stillstand das Verpackungsmaterial nicht verbrennen kann. Dies bewirkt aber auch eine geringere Erwärmung der gesamten Produktezuführung.

Durch den ermöglichten grösseren Füllquerschnitt kann die Luft besser aus dem Beutel entweichen, und es kann in kürzerer Zeit eine grössere Menge eingefüllt werden, somit wird auch die Leistung der Maschine gesteigert.

**Patentansprüche**

1. Vorrichtung an einer Verpackungsmaschine zum Herstellen von Verpackungsbeuteln mittels Bändern eines siegelfähigen Materials, indem getrennt zulaufende Bänder (B1, B2) über Bandführungen (17, 18) um mindestens einen Hohldorn (4) formbar sind und einer ersten Siegelstelle (S) für die Längsnähte und einer zweiten Siegelstelle (9) für die Quernaht zuführbar sind, dadurch gekennzeichnet, dass für jedes Band (B1, B2) mindestens ein ortsfestes konvex gewölbtes Stützelement (17, 18) zwischen im Abstand voneinander angeordneten koaxialen Siegelscheibenpaaren (60-63) zur Bildung der Längsnähte vorhanden ist, dass zur Festlegung des Umschlingungsweges der Bänder (B1, B2) auf den Siegelscheibenpaaren (60-63) stromaufwärts derselben je ein Umlenkmittel (8) angeordnet ist, und dass die Stützelemente (17, 18) mit Formelementen (19, 20, 20a) zur Formung der Beutelwände ausgerüstet sind.

2. Vorrichtung nach Patentanspruch 1, dadurch gekennzeichnet, dass die Siegelscheibenpaare (60-63) auf mit Heizelementen (64) bestückten Trägerwalzen (65, 66) gehaltert sind.

3. Vorrichtung nach Patentanspruch 1 oder 2, dadurch gekennzeichnet, dass die Stützelemente (17, 18) Teile eines Hohlzylinders aufweisen und im Abstand über den Trägerwalzen (65, 66) gehaltert sind.

4. Vorrichtung nach Patentanspruch 3, dadurch gekennzeichnet, dass die Mantelfläche der Stützelemente (17, 18) auf gleicher Höhe über den Achsen der Trägerwalzen (65, 66) liegen wie die peripheren Flächen der Siegelscheibenpaare (60-63).

5. Vorrichtung nach Patentanspruch 4, dadurch gekennzeichnet, dass die Mantelfläche der Stützelemente (17, 18) mit einer Anzahl radialer Nuten (21, 22, 23) versehen ist.

6. Vorrichtung nach einem der Patentansprüche 1 bis 5, dadurch gekennzeichnet, dass die Formelemente (19, 20) mit einer über die periphere Fläche der Siegelscheibenpaare (60-63) vorstehenden Formschulter (20) ausgerüstet sind.

7. Vorrichtung nach Patentanspruch 6, dadurch gekennzeichnet, dass sich die Siegelstelle (S), an der sich die jeweils einander zugeordneten Siegelscheibenpaare (60-63) berühren, stromabwärts der Formschulter (20) befindet.

8. Vorrichtung nach Patentanspruch 7, dadurch gekennzeichnet, dass die Formelemente (19, 20) im Bereich der Siegelstelle (S) konkave Wölbungen aufweisen und wenigstens angenähert tangential bezüglich der peripheren Flächen der Siegelscheiben verlaufen.

9. Vorrichtung nach Patentanspruch 1, gekennzeichnet durch mehrere nebeneinander angeordnete Stützelemente (17, 18), zwischen denen Siegelscheiben (61, 62) angeordnet sind, um reihenweise nebeneinander befindliche Verpackungsbeutel herzustellen.

10. Vorrichtung nach Patentanspruch 9, dadurch gekennzeichnet, dass zwischen benachbarten Siegelscheibenpaaren (61, 62) der paarweise nebeneinander befindlichen Stützelemente Längsschneidelemente (7) angeordnet sind.

11. Vorrichtung nach Patentanspruch 9, dadurch gekennzeichnet, dass die Längsschneidelemente Rotationsmesser (7) sind.

12. Vorrichtung nach Patentanspruch 2, dadurch gekennzeichnet, dass bei mit Heizelementen (64) bestückten Trägerwalzen (65, 66) mindestens die Stützelemente (17, 18) eine Kühlbohrung (26) aufweisen.

13. Vorrichtung nach Patentanspruch 1, dadurch gekennzeichnet, dass die Stützelemente (17, 18) separate mit Verbindungsmitteln (28) verbundene Formelemente (19a, 20a) aufweisen.

## Claims

1. A device in a packaging machine for making packaging bags using strips of a sealable material, in which separately running strips (B1, B2) are mouldable around at least one hollow mandrel (4) and feedable by way of strip guides (17, 18) to a first sealing point (S) for the longitudinal seams and to a second sealing point (9) for the cross seam, characterised in that, for each strip (B1, B2), at least one fixed convex support element (17, 18) is provided between coaxial pairs of sealing discs (60-63), which are disposed at intervals from one another, to form the longitudinal seams, that, to determine the looping path of the strips (B1, B2) on the pairs (60-63) of sealing discs, a deflecting means (8) is disposed upstream of each of them, and that the support elements (17, 18) are provided with moulding elements (19, 20, 20a) for moulding the bag walls.

2. A device as claimed in claim 1, characterised in that the pairs (60-63) of sealing discs are mounted on carrier rollers (65, 66) which are provided with heating elements (64).

3. A device as claimed in claim 1 or 2, characterised in that the support elements (17, 18) have parts of a hollow cylinder and are mounted at intervals about the carrier rollers (65, 66).

4. A device as claimed in claim 3, characterised in that the outer surface of the support elements (17, 18) lies at the same height above the axis of the carrier rollers (65, 66) as the peripheral surfaces of the pairs (60-63) of sealing discs.

5. A device as claimed in claim 4, characterised in that the outer surface of the support elements (17, 18) is provided with a number of radial grooves (21, 22, 23).

6. A device as claimed in any of claims 1 to 5, characterised in that the moulding elements (19, 20) are provided with a moulding shoulder (20) projecting above the peripheral surface of the pairs (60-63) of sealing discs.

7. A device as claimed in claim 6, characterised in that the sealing point (S), at which the associated pairs (60-63) of sealing discs are in contact with one another, is disposed downstream of the moulding shoulder (20).

8. A device as claimed in claim 7, characterised in that the moulding elements (19, 20) are concave in the region of sealing points (S) and run substantially tangentially with regard to the peripheral surfaces of the sealing discs.

9. A device as claimed in claim 1, characterised by a plurality of adjacently disposed support elements (17, 18), between which sealing discs (61, 62) are disposed, in order to produce adjacent packaging bags in series.

10. A device as claimed in claim 9, characterised in that straight-line cutting elements (7) are disposed between adjacent pairs (61, 62) of sealing discs of the support elements, which are disposed in pairs next to each other.

11. A device as claimed in claim 9, characterised in that the straight-line cutting elements are rotary knives (7).

12. A device as claimed in claim 2, characterised in that, in the case of carrier rollers (65, 66) fitted with heating elements (64), at least the support elements (17, 18) have a cooling bore (26).

13. A device as claimed in claim 1, characterised in that the support elements (17, 18) have separate moulding elements (19a, 20a) connected to connecting means (28).

## Revendications

1. Dispositif dans une machine d'emballage pour la fabrication de sachets d'emballage au moyen de bandes d'une matière soudable, dispositif dans lequel des bandes (B1, B2) qui arrivent séparément peuvent être façonnées, au moyen de guide-bandes (17, 18), autour d'au moins un mandrin creux (4) et peuvent être entraînés vers un premier point de soudage (S) pour les soudures longitudinales et vers un second point de soudage (9) pour la soudure transversale, caractérisé en ce qu'il est prévu, pour chaque bande (B1, B2), au moins un élément d'appui fixe (17, 18) en arc convexe entre des paires de disques de soudage coaxiaux (60-63) disposés à distance l'un de l'autre pour la formation des soudures longitudinales, en ce qu'il est disposé, pour la fixation du trajet d'enroulement des bandes (B1, B2) sur les paires de disques de soudage (60-63), en amont de ceux-ci, des moyens de déviation respectifs (8) et en ce que les éléments d'appui (17, 18) sont munis d'éléments de façonnage (19, 20, 20a) pour le façonnage des parois des sachets.

2. Dispositif selon la revendication 1, caractérisé en ce que les paires de disques de soudage (60-63) sont fixés sur des cylindres porteurs (65, 66) munis d'éléments chauffants (64).

3. Dispositif selon la revendication 1 ou 2, caractérisé en ce que les éléments d'appui (17, 18) comportent des parties d'un cylindre creux et sont fixés à distance au-dessus des cylindres porteurs (65, 66).

4. Dispositif selon la revendication 3, caractérisé en ce que les surfaces extérieures des éléments d'appui (17, 18) sont situées à la même hauteur au-dessus des axes des cylindres porteurs (65, 66) que les surfaces périphériques des paires de disques de soudage (60-63).

5. Dispositif selon la revendication 4, caractérisé en ce que les surfaces latérales des éléments d'appui (17, 18) sont munies d'un certain nombre de gorges radiales (21, 22, 23).

6. Dispositif selon l'une quelconque des revendications 1 à 5, caractérisé en ce que les éléments de façonnage (19, 20) sont munis d'un épaulement de façonnage (20) qui fait saillie sur la surface périphérique des paires de disques de soudage (60-63).

7. Dispositif selon la revendication 6, caractérisé en ce que le point de soudage (S), au niveau duquel les paires de disques de soudage'(60-63) respectivement associées entrent en contact, se trouve en aval de l'épaulement de façonnage (20).

8. Dispositif selon la revendication 7, caractérisé en ce que les éléments de façonnage (19, 20) présentent, dans la région du point de soudage (S), des parties en arc concave et s'étendent dans une direction au moins approximativement tangentielle par rapport aux surfaces périphériques des disques de soudage.

9. Dispositif selon la revendication 1, caractérisé par plusieurs éléments d'appui (17, 18) disposés côte à côte, entre lesquels sont placés des disques de soudage (61, 62), pour la fabrication de sachets d'emballage qui sont juxtaposés en rangées.

10. Dispositif selon la revendication 9, caractérisé en ce que des éléments de coupe longitudinale (7) sont disposés entre des paires voisines de disques de soudage (61, 62) des éléments d'appui juxtaposés par paires.

11. Dispositif selon la revendication 9, caractérisé en ce que les éléments de coupe longitudinale sont des couteaux rotatifs (7).

12. Dispositif selon la revendication 2, caractérisé en ce qu'à proximité de cylindres porteurs (65, 66) munis d'éléments chauffants (64), au moins les éléments d'appui (17, 18) comportent une forure de refroidissement (26).

13. Dispositif selon la revendication 1, caractérisé en ce que les éléments d'appui (17, 18) comportent des éléments de façonnage séparés (19a, 20a), fixés par des moyens d'assemblage (28).

Fig.1

0 129 512

# Fig. 2

0 129 512

## Fig. 3

0 129 512

Fig. 4

Fig. 5